# EUROPEAN PATENT APPLICATION

(11) **EP 3 799 462 A1**
(43) Date of publication of application: **31.03.2021**
(21) Application number: 20194613.4
(22) Date of filing: 04.09.2020
(51) Int. Cl.: H04W 12/08, H04W 12/47, H04W 12/63, G07C 9/00, B60R 25/00, H04W 4/02, H04W 4/40, B60R 25/24

(54) **SYSTEMS AND METHODS FOR ACCESS CONTROL USING FIELD STRENGTH**

(30) Priority: 30.09.2019 US 201916588451
(71) Applicant: NXP B.V., 5656 AG Eindhoven (NL)
(72) Inventor: GRAEBER, Frank, 5656 AG Eindhoven (NL); EBER, Wolfgang, 5656 AG Eindhoven (NL)
(74) Representative: Bradler, Carola Romana

(57) **Abstract**

The embodiments described herein include systems and methods for providing controlled accesses to secured devices using near-field communication signals transmitted from a mobile communication device. More specifically, the embodiments described herein determine a measure of a field strength of a near-field communication signal transmitted from a mobile communication device to determine a distance to the mobile communication device, and selectively allow access to the secured device based at least in part on that determined distance. Such a system and method can be implemented using features commonly provided on smart phones and other mobile communication devices, and as such can be used to provide a distance-based controlled access to a secured device without requiring the user to carry a separate key-fob or other specialized hardware.

## Description

### TECHNICAL FIELD

The embodiments described herein relate generally to access control, and more particularly, relate to access control for secured devices using field strength.

### BACKGROUND

Access control systems are used to provide access to secured devices that are locked or otherwise secured. For example, access control systems have been commonly used to provide selective access to automobiles by allowing only users with the correct key-fob to unlock the automobile.

Recently there has been a push to use mobile communication devices such as smart phones in place of the key-fob. Such a system can provide controlled access to secured devices using the smart phone and thus do not require a user to carry a dedicated key-fob for this purpose. But in the past the functionality of such systems that use smart phones have been limited. For example, the ability to provide accurate location-based access control using smart phones has been limited.

Thus, there remains a continuing need for improved systems and methods of providing access control.

### BRIEF DESCRIPTION OF THE DRAWINGS

A more complete understanding of the present invention may be derived by referring to the detailed description and claims when considered in connection with the Figures, wherein like reference numbers refer to similar items throughout the Figures, the Figures are not necessarily drawn to scale, and:
FIG. 1 shows a schematic diagram of an access control system in accordance with an embodiment;
FIG. 2 shows a flow diagram of access control method in accordance with an embodiment;
FIGS. 3A and 3B show schematic diagrams of exemplary use cases of an access control system in accordance with an embodiment; and
FIG. 4 shows a schematic diagram of received signal strength indicator in accordance with an embodiment.

### DETAILED DESCRIPTION

The embodiments described herein include systems and methods for providing controlled accesses to secured devices using near-field communication signals transmitted from a mobile communication device. More specifically, the embodiments described herein determine a measure of a field strength of a near-field communication signal transmitted from a mobile communication device to determine a distance to the mobile communication device, and selectively allow access to the secured device based at least in part on that determined distance. Such a system and method can be implemented using features commonly provided on smart phones and other mobile communication devices, and as such can be used to provide a distance-based controlled access to a secured device without requiring the user to carry a separate key-fob or other specialized hardware.

Specifically, the access control system is configured to operate with a smart phone or other mobile communication devices that can transmit near-field communication signals. The access control system can measure the field strength of such near-field communication signals transmitted by the mobile communication device and use the measure of the field strength to determine a distance to the mobile communication device. With this distance determined, the access control system can allow access to the secured device only when the mobile communication device is within a threshold distance. It should be noted that while many smart phones and other mobile communication devices include near-field communication transmitters that these features have been traditionally used only for very short range, peer-to-peer communication. By providing the ability to receive a measure the field strength of these near-field communication signals the access control system can utilize these common peer-to-peer communication features to determine a distance to the mobile communication device and provide controlled access at least in part on that distance. And again, by utilizing features commonly provided on mobile communication devices the access control system can provide this controlled access without requiring the user to carry a separate key-fob or other specialized hardware.

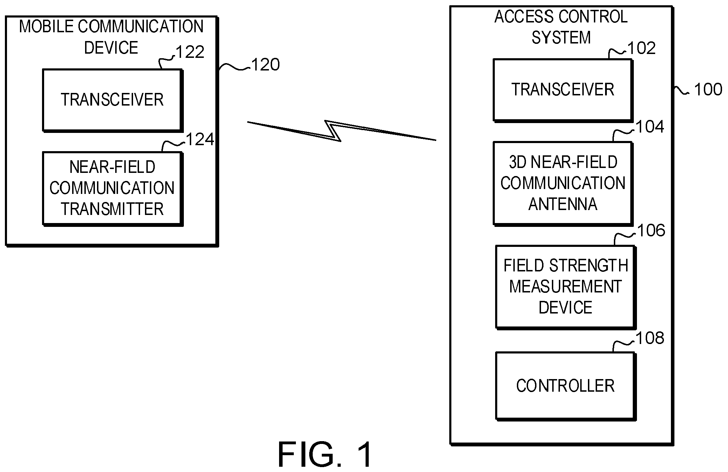

Turning now to FIG. 1, a schematic diagram of an exemplary access control system 100 is illustrated. The access control system 100 includes a digital communication transceiver 102, a three dimensional (3D) near-field communication antenna 104, a field-strength measurement device 106, and a controller 108. The access control system 100 is configured to interoperate with a mobile communication device 120 to provide controlled access to a secured device. As will be described in greater detail below, the mobile communication device 120 can be any suitable smart phone or other mobile communication device that includes a suitable digital communication transceiver 122 and a near-field communication transmitter 124.

In general, the access control system 100 is configured to instruct the mobile communication device 120 to transmit near-field communication signals and then the access control system 100 measures the field strength of those near-field communication signals. Specifically, the digital communication transceiver 102 on the access control system 100 is configured to transmit to and receive from the digital communication transceiver 122 on the mobile communication device 120. The 3D near-field communication antenna 104 on the access control system 100 is configured to receive near-field communication signals transmitted by the near-field communication transmitter 124. The field strength measurement device 106 is configured to then determine a measure of a field strength of these near-field communication signal received at the 3D near-field communication antenna 104.

The controller 108 is coupled to the digital communication transceiver 102, the 3D near-field communication antenna 104, and the field strength measurement device 106. In general, the controller 108 is configured to establish a communication link between the controller and the mobile communication device using the digital communication transceiver 102. The controller 108 is further configured to determine a distance to the mobile communication device 120 based at least in part on the measure of the field strength of the near-field communication signal. Finally, the controller 108 is further configured to allow access to the secured device in response to the determined distance to the mobile communication device being below a threshold.

So configured, the access control system 100 can measure the field strength of near-field communication signals transmitted by the mobile communication device 120 and use the measure of the field strength to determine a distance to the mobile communication device 120. With this distance determined, the access control system 100 can allow access to the secured device only when the mobile communication device 120 is within a selected threshold distance.

It should again be noted that the access control system 100 is implemented to provide this functionality by interacting with a digital communication transceiver 122 and a near-field communication transmitter 124 that are commonly included in many smart phones. Specifically, mobile communication devices 122 commonly include near-field communication transmitters 124 to facilitate very short-range peer-to-peer communication with other devices. In one example, the mobile communication device 122 uses 13.56 MHz signals for near-field communication. The access control system 100 uses signals transmitted from the near-field communication transmitter 124 not for peer-to-peer communication, but instead for determining a distance to the mobile communication device 120 (although in other embodiments the near-field communication transmitter can also be used for additional communication). Thus, the access control system 100 can utilize these common peer-to-peer transmitters found in smart phones to determine a distance to the mobile communication device 120 and provide controlled access based at least in part on that distance. And again, by utilizing features commonly provided on mobile communication devices 120 the access control system can provide this controlled access without requiring the user to carry a separate key-fob or other specialized hardware.

Additionally, the use of near-field communication signals for determining distance can provide several additional advantages. For example, because the magnetic field distribution generated by 13.56 MHz near-field communication signals falls with approximately 60 dB per decade the use of field strength to determine distance can provide relatively high accuracy. Additionally, the use of 13.56 MHz near-field communication signals provides limited metal shield penetration and thus can provide accurate determination of whether the mobile communication device 120 is inside or outside compared to the antennas. Additionally, human body attenuation is lower for 13.56 MHz signals compared to GHz signals, and thus the impact of the human body on the accuracy of the distance determination is reduced.

In a further embodiment the near-field communication signals can be code modulated with a secret code (e.g., one shared using the BLE link) to further increase security. In this case, the access control system 100 would enable access only if the code transmitted by the near-field communication transmitter 124 matches the code expected by the access control system 100. And in some embodiments these codes can be changed (e.g., a rolling code) to further enhance this security.

In one embodiment the digital communication transceiver 102 comprises a Bluetooth® Low Energy (BLE) compatible transceiver. Such BLE transceivers operate in the 2.400-2.4835 GHz spectrum to provide digital communication between devices. Furthermore, BLE transceivers save power by operating in a sleep mode except for when a connection is made to another device. As such, BLE transceivers can provide digital communication between devices while not requiring excessive power consumption.

In one embedment the BLE transmissions can be used to provide a relatively coarse estimation of the distance of between the mobile communication device 120 and the access control system 100. Such a coarse estimation of the distance can be used to reduce the time that the near-field communication signal is transmitted by the mobile communication device 120 and thus save power on the mobile communication device 120. Additionally, this coarse estimation can provide additional level of security by requiring a hacker to spoof multiple signals providing multiple distance estimations before access would be granted.

In one embodiment, the 3D near-field communication antenna 104 comprises a plurality of loop antennas configured to receive magnetic signals. In general, such loop antennas each include a loop of electrical conductor that is configured to couple to the magnetic field of the near-field communication signal. In one more specific embodiment, the 3D near-field communication antenna 104 comprises an array at three loop antennas arranged in a mutually orthogonal configuration. Because the magnetic field is a vector in space such an orthogonal configuration can be used to measure the vector amplitude of a magnetic signal independently of the orientation of the near-field communication transmitter 124. Thus, such configuration can be used to reliably determine the field strength and the distance to the mobile communication device 124 independently of the orientation of the near-field communication transmitter 124.

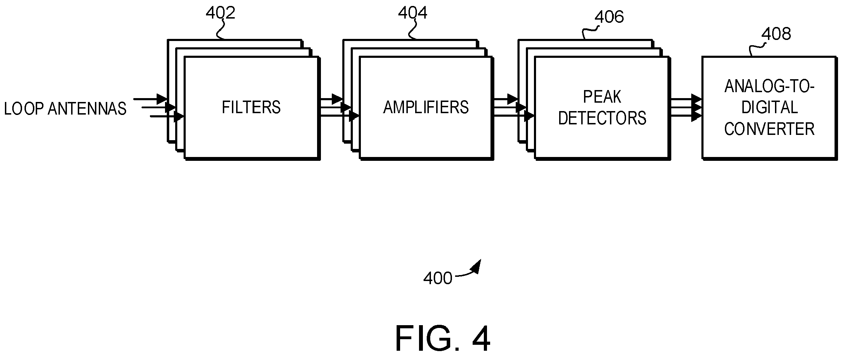

In one embodiment, the field-strength measurement device 106 comprises a plurality of received signal strength indicators. In such an embodiment each received signal strength indicator is coupled to one antenna in the 3D near-field communication antenna 104. Thus, in one embodiment three received signal strength indicators are each coupled to one of the three loop antennas arranged in a mutually orthogonal configuration. Again, such a configuration can be used to reliably determine the field strength and the distance to the mobile communication device 124 independently of the orientation of the near-field communication transmitter 124. A detailed example of such a received signal strength indicator will be described below with reference to FIG. 4.

As described above, the controller 108 is coupled to the digital communication transceiver 102, the 3D near-field communication antenna 104, and the field strength measurement device 106. In general, the controller 108 controls the operation of the access control system 100. Thus, the controller 100 can include a combination of hardware and software needed to implement the functionality of the access control system 100. In one embodiment the controller 108 is implemented with a suitable microcontroller or processor, such an ARM M0-M3 32-bit microcontroller. Such a controller 108 can be implemented to communicate with the mobile communication device 120, determine a distance to the mobile communication device 120, and selectively control access to the secured device based on that distance.

For example, such a controller 108 can include at least one input coupled to receive measures of the field strength from the field strength measurement device 106. Furthermore, such a controller 108 can include at least one input/output (I/O) for communicating and controlling the digital communication transceiver 102. Furthermore, such a controller 108 can include at least one I/O for communicating with the secured device to provide selective access to the device. As one example, the controller 108 can use an I/O to provide a signal to lock or unlock a physical lock on the secured device. As one more specific example, the controller 108 can be used to generate a signal to unlock a door on an automobile.

As was described above, the mobile communication device 120 can be any suitable smart phone or other communication device that includes digital communication transceiver 122 and a near-field communication transmitter 124. Examples of such mobile communication devices 120 include smart watches and other wearable communication devices.

The access control system 100 can be used to provide controlled access to a variety of different types of secured devices. For example, access control system 100 can be used to provide controlled access to a variety of different of vehicles including automobiles. In such embodiments the access control system 100 can unlock vehicle doors and/or enable vehicle operation. In other embodiments the access control system 100 can provide this access control with additional functionality. For example, the access control system 100 can be used to enable trunk opening, engine starting, climate control, vehicle lights and/or other such features when a user is within a predetermined distance. As another example the access control system 100 can be used to provide access control to rooms or buildings by selectively unlocking door locks or disabling alarms. In other applications the access control system 100 can be used to provide access control to public transportation systems (e.g., used to unlock a turnstile providing access to a train or subway) or private transportation systems (e.g., provide access to a ski-lift).

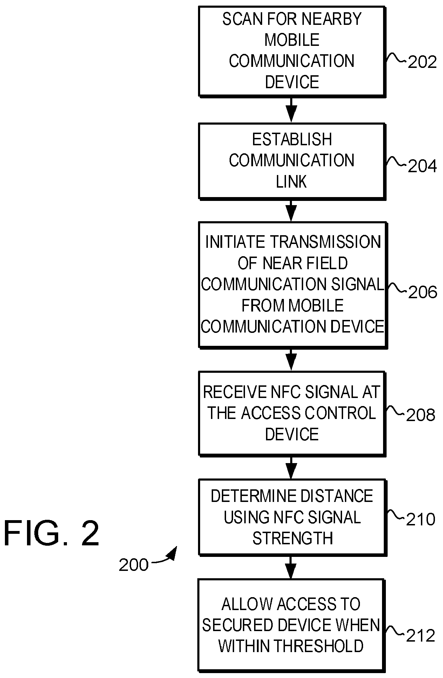

Turning now to FIG. 2, a flow diagram illustrates an exemplary access control method 200. The method 200 is exemplary of the type of procedure that can be performed by an access control system (e.g., access control system 100) to provide controlled access to a secured device (e.g., an automobile or other vehicle). The first step 202 in method 200 is to scan for a nearby mobile communication device. In this step the access control system scans for a specific nearby mobile communication device that has been linked or otherwise set up to access the secured device. As described above, in one embodiment the access control system can use a digital communication protocol such as Bluetooth® Low Energy (BLE) to identify and communicate with the mobile communication device. In such an embodiment the mobile communication device can advertise its presence using "advertising transmissions" that are defined by the BLE protocol. In such an embodiment step 202 can be performed by the access control system scanning for these BLE defined advertising transmissions. When such an advertising transmission is received at the access control system the method 200 may proceed to step 204. It should be noted however that the use of BLE advertising transmissions is just one example any suitable procedure and technique for scanning for nearby mobile communication devices can be used in method 200.

The next step 204 is to establish a communication link between the access control system and the mobile communication device. The actions taken to establish such a connection would again depend upon the wireless communication protocol used. In a BLE implementation, the establishment of this link can involve a BLE defined pairing procedure where the devices authenticate and share encryption keys to establish a secure communication link. However, this is again just one example and any suitable technique can be used to establish a wireless communication link between the access control system and the mobile communication device.

It should be noted that BLE typically has an effective range of between 10 and 100 meters. Other wireless communication systems typically have similar limitations. As such, step 204 can only be performed when a user has brought the mobile communication device within the range of the digital communication transceivers. In a typical embodiment the access control system and/or mobile communication device can be configured to partially "sleep" or otherwise save power when the devices are outside the usable range. Thus, power can be conserved by establishing a link in step 204 only when the mobile communication device is within range and when a user at least somewhat more likely to be heading toward the secured device.

The next step 206 is to initiate transmission of a near-field communication signal from the mobile communication device. In general, the access control system can initiate this transmission by sending an appropriate command to the mobile communication device over the communication link. Upon receipt of this command the mobile communication device can then begin transmission of near-field communication signals. As was described above, the embodiments described herein use these near-field communication signals to determine a distance between the mobile communication device and the access control system. In one embodiment a sync signal is also generated and transmitted using the digital communication transceiver to the access control system to activate the field strength measurement device.

The next step 208 is to receive a near-field communication signal at the access control system. This step is performed by a suitable 3D near-field communication antenna. Again, the 3D near-field communication antenna can comprise an array at three loop antennas arranged in a mutually orthogonal configuration. This allows the signal received by the 3D antenna to have a vector amplitude independent of the orientation of the near-field communication transmitter on the mobile communication device. And as described above, this facilitates an accurate determination of the field strength of the near-field communication signal.

The next step 210 is to determine the distance to the mobile communication device using a measure of the near-field communication signal strength. In general, this step can be performed by first determining a measure of the received signal strength and then estimating the distance based at least in part on that measure. The measure of the signal strength can be determined by measuring the signal amplitude peaks and converting those peaking to digital values. With the measure of the received signal strength determined, the distance to the mobile communication device can be determined.

As one example, the distance can be determined based on a vector magnitude of the received signal, with the 3D antenna providing a measure of three coordinates of the field which can then be used to determine the length of the vector using Pythagorean's theorem. Then, the distance can be calculated as the received signal strength drops with 1/r³ with the distance r. In addition, in some embodiments the near-field communication signal can be retransmitted from the mobile communication device at varying power levels to confirm the distance calculation at those different power levels. This varying of power levels can further be used to provide additional security by transmitting sequence of near-field communication signals with a previously determined sequence of power levels that can be received and confirmed as having the proper sequence.

The next step 212 is to allow access to the secured device when the mobile communication device is determined to be within a threshold. In this step the access control system can generate a signal to selectively lock/unlock the secured device based at least in part of the determined distance. For example, the access control system can be configured to generate a command to unlock a vehicle door when the mobile phone is determined to be within a few meters of the vehicle.

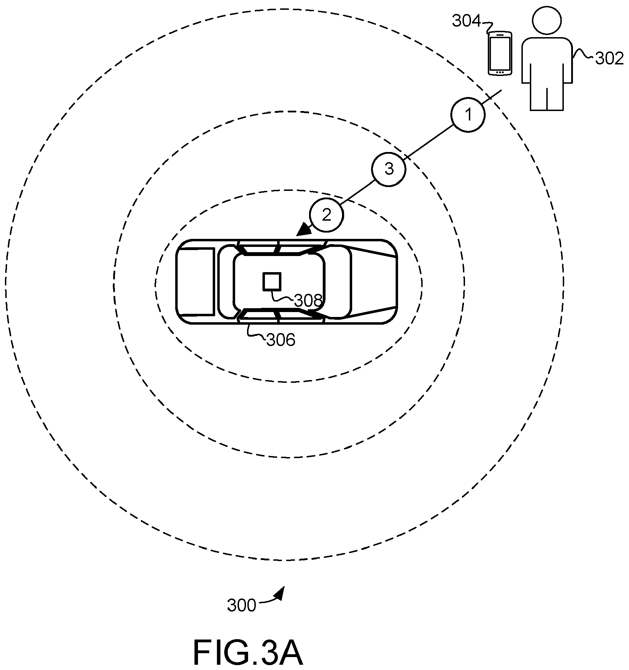

Turning now to FIG. 3A, an exemplary use case 300 for an access control system 306 is illustrated schematically. In this use case 300 a user 302 is carrying a smart phone 304 while approaching a vehicle 306 that includes the access control system 308. As the user reaches point (1) the smart phone 304 is within communication range of the access control system 308. Thus, the access control system 308 establishes a communication link with the smart phone 304. With the communication link established, the smart phone 304 is instructed to being transmitting near-field communication signals. As was described above, the access control system 308 uses these near-field communication signals to determine a distance between the smart phone 304 and the access control system 308. Specifically, the access control system 308 determines measures of the field strength of the near-field communication signals and uses those measures to determine the distance. This process is repeated, allowing the distance to be repeatedly determined while the user 302 approaches the vehicle 306. As user 302 reaches point (2) the distance becomes less than a threshold level and the access control system 310 generates a command to unlock the doors when the door handle is activated. Thus, distance-based controlled access to the vehicle 306 is provided without requiring the user to carry a separate key-fob or other specialized hardware.

In some embodiments, additional functionality can be provided based the distances determined by the access control system 306. For example, in some embodiments the access control system 306 can be implemented to turn on interior lights in the vehicle when the user reaches a second threshold distance represented by point (3).

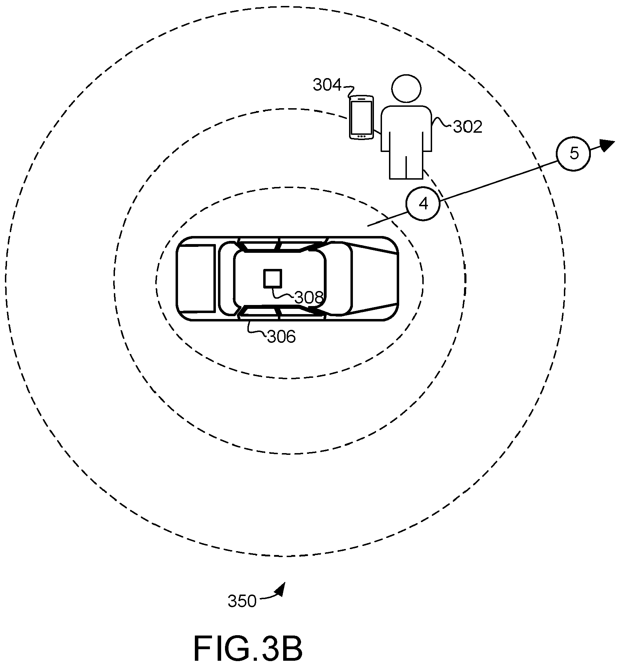

Turning now to FIG. 3B, a second exemplary use case 350 for an access control system 306 is illustrated schematically. In this use case 350 the user 302 is carrying the smart phone 304 while moving away from the vehicle 306 that includes the access control system 308. As the user moves away from the vehicle 306 the smart phone 304 is instructed to continue transmitting near-field communication signals and the access control system 308 continues to use these near-field communication signals to determine a distance between the smart phone 304 and the access control system 308. As user 302 reaches point (4) the distance becomes greater than a threshold level and the access control system 310 generates a command to relock the doors and/or activate other security features. It should be noted that the threshold level used to relock the doors can be the same threshold level used to originally unlock the doors or it can be a different threshold level. Also, at this point any interior lights can be shut off. Then, as the system reaches point (5) the smart phone can be instructed to stop transmitting near-field communication signals.

Turning now to FIG. 4, a schematic diagram of an exemplary received signal strength indicator 400 is illustrated. The received signal strength indicator 400 is an example of the type of device that can be used to generate a measure of the signal strength of a received near-field communication signal. As such, it can be used in a field strength measurement device in the various embodiments described above (e.g., field strength measurement device 106).

The received signal strength indicator 400 includes filters 402, amplifiers 404, peak detectors 406 and an analog-to-digital converter (ADC) 408. In this embodiment each of the filters 402, amplifiers 404, and peak detectors 406 is coupled in series to one of the loop antennas in the 3D near-field communication antenna. In general, each filter 405 filters the received near-field communication signal to remove noise and each amplifiers 404 amplifies the corresponding filtered received signal. Each peak detector 406 then detect the corresponding peak amplitude of the received signal, and the ADC 408 converts the peak amplitude values to digital format where they can be used as a measure of the field strength by the access control system. With the peak amplitude values determined from each of the three loop antennas arranged in a mutually orthogonal configuration these peak amplitude values can be used as a reliable measure of the field strength independently of the orientation of the near-field communication transmitter

In one embodiment, a system for controlling access to a secured device is provided, the system comprising: a digital communication transceiver, the digital communication transceiver configured to transmit to and receive from a linked mobile communication device; a three-dimensional (3D) near-field communication antenna, the 3D near-field communication antenna configured to receive near-field communication signals on the secured; a field strength measurement device, the field strength measurement device coupled to the 3D near-field communication antenna and configured to determine a measure of a field strength of a near-field communication signal at the secured device; and a controller, the controller coupled to the digital communication transceiver, the 3D near-field communication antenna, and the field strength measurement device, the controller configured to: in response to detecting the mobile communication device, establish a communication link between the controller and the mobile communication device using the digital communication transceiver; determine a distance to the mobile communication device based at least in part on the measure of the field strength of the near-field communication signal at the secured device; and in response to the determined distance to the mobile communication device being below a threshold, allow access to the secured device.

Further embodiments of the system may include one of the following features, or any combination thereof. The digital communication transceiver may comprise a Bluetooth Low Entergy (BLE) transceiver. The 3D near-field communication antenna may include a plurality of loop antennas configured to receive magnetic signals. The field strength measurement device may include a plurality of received signal strength indicators coupled to the plurality of antennas. The 3D near-field communication antenna may comprise an array of three loop antennas arranged in a mutually orthogonal configuration and configured to receive near-field communication signals at three locations on the secured device. The field strength measurement device may include a received signal strength indicator for each of the three loop antennas. The controller may be configured to allow access to the secured device by generating a signal to unlocking a lock. The controller may be configured to allow access to the secured device by generating a signal to unlocking a lock. The secured device may be an automobile, and the controller may be configured to allow access to the secured device by generating a signal to unlock a door on the automobile.

In another embodiment, a vehicle access control system is provided, the vehicle access control system comprising: a digital communication transceiver on a vehicle, the digital communication transceiver configured to transmit to and receive from a linked mobile communication device; a three-dimensional (3D) near-field communication antenna, the 3D near-field communication antenna configured to receive near-field communication signals at at least three locations on the vehicle; a field strength measurement device, the field strength measurement device coupled to the 3D near-field communication antenna and configured to determine a measure of a field strength of a near-field communication signal and the at least three locations; and a controller, the controller coupled to the digital communication transceiver, the 3D near-field communication antenna, and the field strength measurement device, the controller configured to: initiate a scan for the mobile communication device using the digital communication transceiver; in response to detecting the mobile communication device, establish a communication link between the vehicle and the mobile communication device using the digital communication transceiver; initiate transmission of near-field communication signal from the mobile communication device to the vehicle; determine a distance to the mobile communication device based at least in part on the measure of the field strength of the near-field communication signal at the at least three locations on the vehicle; in response to the determined distance to the mobile communication device being below a threshold, unlock the vehicle.

In one or more embodiments, the digital communication transceiver on the vehicle may comprise a Bluetooth Low Entergy (BLE) transceiver and the 3D near-field communication antenna may include a plurality of loop antennas configured to receive magnetic signals.

In another embodiment, an access control method is provided, comprising the steps of: in response to detecting a mobile communication device, establishing a communication link between a secured device and the mobile communication device using a digital communication transceiver; initiating transmission of near-field communication signal from the mobile communication device to the secured device; receiving the near-field communication signal at a three-dimensional (3D) near-field communication antenna on the secured device; determining a measure of a field strength of the near-field communication signal received at the 3D near-field communication antenna; determining a distance to the mobile communication device based at least in part on the measure of the field strength of the near-field communication signal received at the 3D near-field communication antenna; and in response to the determined distance to the mobile communication device being below a threshold, allowing access to the secured device.

Further embodiments of the method may include one of the following features, or any combination thereof. The digital communication transceiver may comprise a Bluetooth Low Entergy (BLE) transceiver. The 3D near-field communication antenna may include a plurality of loop antennas configured to receive magnetic signals. The determining the measure of the field strength of the near-field communication signal received at the 3D near-field communication may comprise using a plurality of received signal strength indicators coupled to the plurality of antennas. The 3D near-field communication antenna may comprise an array of three loop antennas arranged in a mutually orthogonal configuration and configured to receive near-field communication signals at three locations on the secured device. The determining the measure of the field strength of the near-field communication signal received at the 3D near-field communication may comprise using a plurality of received signal strength indicators coupled to each of the three loop antennas. The allowing access to the secured device may comprise unlocking a lock. The allowing access to the secured device may comprise unlocking a lock on an automobile. The method may further comprise scanning for the mobile communication device using a digital communication transceiver on a secured device.

The embodiments described herein include systems and methods for providing controlled accesses to secured devices using near-field communication signals transmitted from a mobile communication device. More specifically, the embodiments described herein determine a measure of a field strength of a near-field communication signal transmitted from a mobile communication device to determine a distance to the mobile communication device, and selectively allow access to the secured device based at least in part on that determined distance. Such a system and method can be implemented using features commonly provided on smart phones and other mobile communication devices, and as such can be used to provide a distance-based controlled access to a secured device without requiring the user to carry a separate key-fob or other specialized hardware.

For the sake of brevity, conventional techniques related to signal processing, sampling, analog-to-digital conversion, digital-to-analog conversion, analog circuit design, differential circuit design, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter. It should be understood that circuitry described herein may be implemented either in silicon or another semiconductor material or alternatively by software code representation thereof.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common mode). The foregoing description refers to elements or nodes or features being "connected" or "coupled" together. As used herein, unless expressly stated otherwise, "connected" means that one element/node/feature is directly joined to (or directly communicates with) another element/node/feature, and not necessarily mechanically. Unless expressly stated otherwise, "coupled" means that one element is directly or indirectly joined to (or directly or indirectly communicates with) another element, and not necessarily mechanically. Thus, although the schematics shown in the figures depict exemplary arrangements of elements, additional intervening elements, devices, features, or components may be present in an embodiment of the depicted subject matter. In addition, certain terminology may also be used in the foregoing description for the purpose of reference only, and thus are not intended to be limiting.

The terms "first," "second," "third," "fourth" and the like in the description and the claims are used for distinguishing between elements and not necessarily for describing a particular structural, sequential or chronological order. It is to be understood that the terms so used are interchangeable under appropriate circumstances. Furthermore, the terms "comprise," "include," "have" and any variations thereof, are intended to cover non-exclusive inclusions, such that a circuit, process, method, article, or apparatus that comprises a list of elements is not necessarily limited to those elements, but may include other elements not expressly listed or inherent to such circuit, process, method, article, or apparatus.

The foregoing description of specific embodiments reveals the general nature of the inventive subject matter sufficiently that others can, by applying current knowledge, readily modify and/or adapt it for various applications without departing from the general concept. Therefore, such adaptations and modifications are within the meaning and range of equivalents of the disclosed embodiments. The inventive subject matter embraces all such alternatives, modifications, equivalents, and variations as fall within the spirit and broad scope of the appended claims.

## Claims

1. A system for controlling access to a secured device, the system comprising:
a digital communication transceiver, the digital communication transceiver configured to transmit to and receive from a linked mobile communication device;
a three-dimensional (3D) near-field communication antenna, the 3D near-field communication antenna configured to receive near-field communication signals on the secured;
a field strength measurement device, the field strength measurement device coupled to the 3D near-field communication antenna and configured to determine a measure of a field strength of a near-field communication signal at the secured device; and
a controller, the controller coupled to the digital communication transceiver, the 3D near-field communication antenna, and the field strength measurement device, the controller configured to:
in response to detecting the mobile communication device, establish a communication link between the controller and the mobile communication device using the digital communication transceiver;
determine a distance to the mobile communication device based at least in part on the measure of the field strength of the near-field communication signal at the secured device; and
in response to the determined distance to the mobile communication device being below a threshold, allow access to the secured device.

2. The system of claim 1, wherein the digital communication transceiver comprises a Bluetooth Low Entergy (BLE) transceiver.

3. The system of any preceding claim, wherein the 3D near-field communication antenna includes a plurality of loop antennas configured to receive magnetic signals.

4. The system of claim 3, wherein the field strength measurement device includes a plurality of received signal strength indicators coupled to the plurality of antennas.

5. The system of any preceding claim, wherein the 3D near-field communication antenna comprises an array of three loop antennas arranged in a mutually orthogonal configuration and configured to receive near-field communication signals at three locations on the secured device.

6. The system of claim 5, wherein the field strength measurement device includes a received signal strength indicator for each of the three loop antennas.

7. The system of any preceding claim, wherein the controller is configured to allow access to the secured device by generating a signal to unlocking a lock.

8. The system of any preceding claim, wherein the controller is configured to allow access to the secured device by generating a signal to unlocking a lock.

9. The system of any preceding claim, wherein the secured device is an automobile, and wherein the controller is configured to allow access to the secured device by generating a signal to unlock a door on the automobile.

10. An access control method comprising the steps of:
in response to detecting a mobile communication device, establishing a communication link between a secured device and the mobile communication device using a digital communication transceiver;
initiating transmission of a near-field communication signal from the mobile communication device to the secured device;
receiving the near-field communication signal at a three-dimensional (3D) near-field communication antenna on the secured device;
determining a measure of a field strength of the near-field communication signal received at the 3D near-field communication antenna;
determining a distance to the mobile communication device based at least in part on the measure of the field strength of the near-field communication signal received at the 3D near-field communication antenna; and
in response to the determined distance to the mobile communication device being below a threshold, allowing access to the secured device.

11. The method of claim 10, wherein the 3D near-field communication antenna includes a plurality of loop antennas configured to receive magnetic signals.

12. The method of claim 11, wherein the determining the measure of the field strength of the near-field communication signal received at the 3D near-field communication comprises using a plurality of received signal strength indicators coupled to the plurality of antennas.

13. The method of any of claims 10 to 12, wherein the 3D near-field communication antenna comprises an array of three loop antennas arranged in a mutually orthogonal configuration and configured to receive near-field communication signals at three locations on the secured device.

14. The method of claim 13, wherein the determining the measure of the field strength of the near-field communication signal received at the 3D near-field communication comprises using a plurality of received signal strength indicators coupled to each of the three loop antennas.

15. The method of any of claims 10 to 14, wherein the allowing access to the secured device comprises unlocking a lock, in particular, unlocking a lock on an automobile.
